# FASCICULE DE BREVET EUROPEEN

(11) **EP 0 427 609 B1**
(45) Date de publication et mention de la délivrance du brevet: **02.02.1994**
(21) Numéro de dépôt: 90403132.5
(22) Date de dépôt: 06.11.1990
(51) Int. Cl.: B05B 11/00, G01F 11/02

(54) **Poussoir mélangeur doseur**
Druckknopf für Misch- und Dosiervorrichtung
Push-button for mixing- and metering device

(30) Priorité: 06.11.1989 FR 8914499
(43) Date de publication de la demande: 15.05.1991
(73) Titulaire: SOCIETE TECHNIQUE DE PULVERISATION (S.T.E.P.), 27130 Verneuil sur Avre (FR)
(72) Inventeur: de Rosa, Daniel, F-27400 Louviers (FR)
(74) Mandataire: Pinguet, André

(56) Documents cités:
- US-A- 4 269 327
- US-A- 4 335 837

## Description

La présente invention a pour objet un dispositif manuel autonome distributeur-mélangeur pour deux liquides notamment pour la pharmacie ou la cosmétique. On connaît déjà de tels dispositifs. En particulier, on connaît déjà des dispositifs comportant deux récipients munis chacun d'un organe d'actionnement à enfoncement (généralement une valve), avec un seul bouton poussoir permettant d'enfoncer simultanément les deux organes (voir notamment brevets FR 1 216 596 VALOIS, 1 413 164 EGEMA, US 3 236 457 KENNEDY & AL, 3 416 709 SPRAY-TAK, CH 399350 L'OREAL, etc.). La tête du poussoir peut comporter une chambre de mélange et les produits sortent mélangés, ou ils peuvent sortir par deux orifices séparés, généralement très voisins, le mélange se faisant au point d'application ou de convergence des deux jets d'expulsion. Un dispositif du genre en question peut fonctionner comme une pompe, l'actionnement du bouton poussoir produisant l'énergie nécessaire pour expulser les produits hors des récipients. La présente invention s'applique plus particulièrement à ce cas. Par liquide, on comprendra ici tout ce qui n'est ni solide, ni gaz, c'est-à-dire les produits suffisamment fluides pour être pompés, les liquides, les crèmes, les pâtes, etc.. Ces dispositifs ont pour but de distribuer un mélange de différentes substances, (le cas échéant sous forme de pulvérisation) qui ne doivent pas rester mélangées plus d'un certain temps avant l'utilisation sans risquer de provoquer des réactions indésirées ou des dégradations.

La présente invention a pour objet un dispositif à pompe du genre en question, de fabrication particulièrement avantageuse. L'invention a aussi pour objet un dispositif du genre en question qui permet de régler à chaque emploi les proportions des produits expulsés.

Par conséquent, l'invention a pour objet un dispositif manuel autonome pour mélanger et distribuer deux liquides comportant:
- deux récipients portables indépendants, juxtaposés, et destinés à contenir chacun un liquide,
- deux pompes montées respectivement sur les deux récipients comportant chacune une tige d'actionnement dont l'enfoncement provoque l'expulsion de liquide hors du récipient, le mélange se produisant simultanément à la distribution au moyen des deux pompes,
- et un bouton poussoir unique actionnant lesdites pompes ensembles et adapté à la fois sur les deux tiges d'actionnement desdites pompes pour appuyer sur les extrémités desdites tiges de façon à provoquer l'expulsion simultanée de deux doses de liquide, chacune hors d'un récipient,

caractérisé en ce que le bouton poussoir est monté sur les tiges avec un jeu axial réglable par rapport à au moins l'extrémité d'une des tiges.

Dans une forme de réalisation de l'invention, le bouton poussoir unique est adaptable sur au moins une des tiges avec un jeu périphérique permettant de glisser en contact étanche autour de ladite tige, et comporte une cale mobile, permettant de varier le jeu axial entre l'extrémité de ladite tige et la surface de poussée du bouton poussoir en regard de cette extrémité.

Dans une forme de réalisation avantageuse, la cale mobile est une pièce circulaire, montée dans un logement circulaire de façon à pouvoir tourner dans ledit logement, pour pouvoir présenter des cames d'épaisseurs différentes en regard de l'extrémité de ladite tige d'actionnement.

D'autres caractéristiques et avantages de l'invention apparaîtront au cours de la description qui va suivre, donnée à titre d'exemple non limitatif, en regard des dessins cijoints, et qui fera bien comprendre comment l'invention peut être réalisée.

Sur les dessins:
- la figure 1 est une vue en perspective d'un exemple de réalisation d'un dispositif selon l'invention,
- la figure 2 est une vue en plan, de dessus, du dispositif de la figure 1,
- la figure 3 est une vue en coupe suivant la ligne III-III de la figure 2,
- la figure 4 est une vue en coupe suivant la ligne IV-IV de la figure 2,
- la figure 5 est une vue en perspective d'une des pièces caractéristiques du dispositif de l'invention,
- les figures 6 et 7 représentent, en coupe par un plan vertical et en plan vu de dessus respectivement, une variante d'exécution de l'invention munie d'un volet de protection contre le séchage, et
- la figure 8 est une vue analogue à la figure 3 pour une variante.

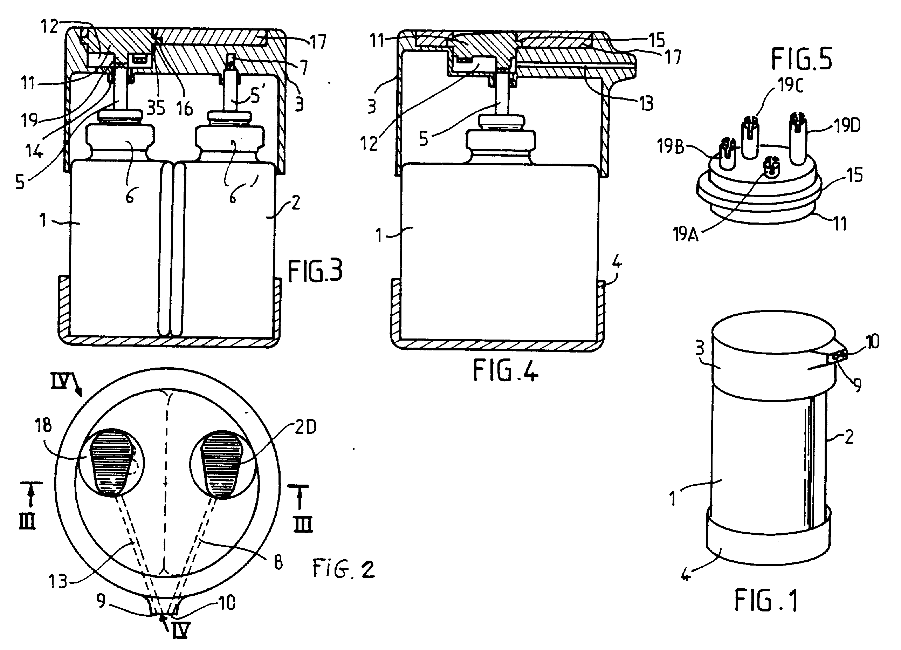

On a représenté en perspective sur la figure 1 un exemple de dispositif selon l'invention. Il est constitué de deux flacons 1, 2 identiques ou symétriques l'un de l'autre, de formes semi-cylindriques, maintenus ensemble par une tête 3 et une embase 4. Dans cet exemple, les flacons sont apparents. L'embase pourrait remonter plus haut et s'engager sous le rebord de la tête. Chacun des flacons est muni d'une pompe, sertie sous le goulot. Les pompes peuvent être identiques ou différentes. Les pompes, dont la conception et la structure ne font pas partie de la présente invention, peuvent être actionnées, comme il est bien connu, par enfoncement d'une tige d'actionnement creuse 5, 5', le produit sortant par le canal central de la tige. Les pompes sont fixées sur les flacons de façon classique par des coupelles 6, 6' serties sur les cols des flacons. Un bouton poussoir, constitué par la tête 3, est engagé sur les deux tiges 5, 5' comme cela est décrit dans les brevets de l'art antérieur cités plus haut.

Dans l'art antérieur, le bouton poussoir comporte pour chaque flacon , à la différence de la présente invention représentée sur les figures où il n'en est ainsi tout au plus que pour seulement un seul flacon, un canal axial 7 raccordé de façon étanche sur le canal de la tige creuse 5', et un canal radial 8 communiquant à une extrémité avec le canal axial 7 et à l'autre extrémité, débouchant à l'extérieur.

Dans l'art antérieur, les deux canaux radiaux peuvent déboucher à l'extérieur en deux orifices voisins 9, 10, indépendants l'un de l'autre, comme représentés sur les dessins, ou se rencontrer à l'intérieur du bouton poussoir, dans une chambre de mélange qui communique avec l'extérieur par un canal radial unique débouchant en un seul point.

Le fonctionnement de ces dispositifs est connu. L'enfoncement du bouton poussoir provoque l'enfoncement des deux tiges 5, 5' des pompes. Chaque pompe émet une dose. Les deux doses sont expulsées par les canaux axiaux puis radiaux et se mélangent dans la chambre de mélange s'il y en a une, ou à l'extérieur, au point de rencontre des jets.

Le volume de chaque dose correspond au volume de la chambre de pompe, pour un enfoncement complet de la tige. Selon l'invention, l'enfoncement d'au moins une des tiges est réglable. Ceci est obtenu par une cale mobile 11, pouvant présenter des épaisseurs différentes en regard de l'extrémité de la tige 5. Dans l'exemple représenté, la cale est rotative. La tête 3 comporte une cavité 12 dans l'axe de la tige 5. Cette cavité contient la cale mobile, pouvant être tournée de l'extérieur. La cavité 12 est en communication avec l'extérieur par un canal de sortie radial 13 et est connectée à la tige 5 d'actionnement de la pompe et de sortie du produit par un joint coulissant étanche 14, formé de préférence au moulage de la tête 3.

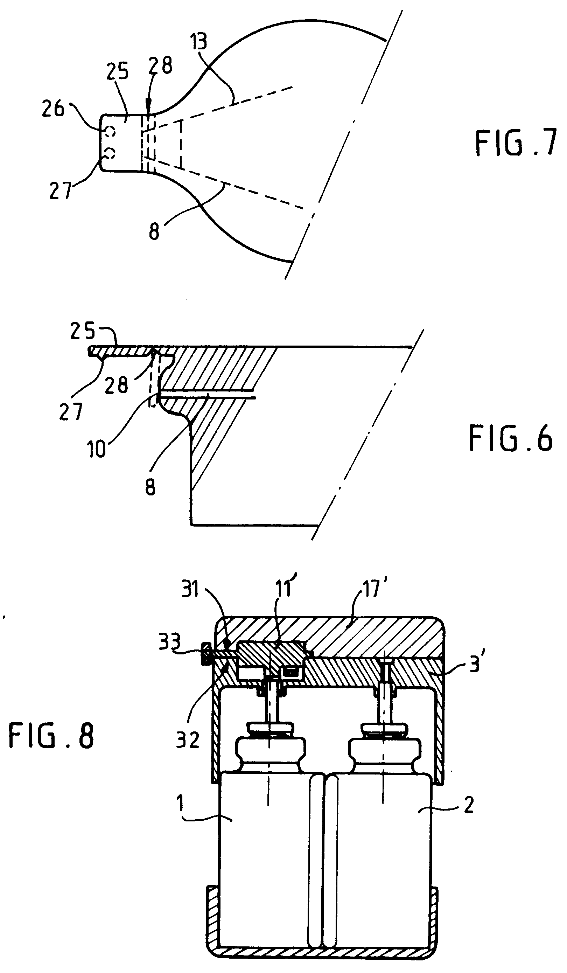

La cale 11 a la forme d'une pastille, munie à sa périphérie d'une collerette 15 permettant d'assurer son maintien en place tout en la laissant tourner, la collerette 15 pouvant glisser dans une rainure circulaire formée à l'intérieur de la tête 3. Ceci peut être obtenu en moulant la tête 3 avec une cavité appropriée avec un orifice dans le fond pour venir s'emmancher sur l'extrémité d'une tige 5. La cavité présente un gradin circulaire 16 sur lequel, lors du montage, on vient poser la collerette 15. On place par dessus un bouchon 17 pour maintenir la cale en place. Dans un mode de réalisation (représenté sur la figure 2), le bouchon présente une ouverture circulaire, laissant apparaître la surface supérieure 18 de la cale. Le bouchon 17 peut être collé, encliqueté, thermoscellé ou soudé par exemple par ultrasons. La face 18 peut porter un moletage et/ou des indications et des repères de position. Le centre de la cale est situé à côté de l'axe de la tige d'actionnement 5 de la pompe. En faisant tourner la cale, le bord extérieur de la surface inférieure de celle-ci défile devant l'axe de la tige d'actionnement 5. La cale comporte sur ce bord inférieur des cames 19A, 19B, 19C, 19D (fig. 5) de différentes longueurs, formées à leurs extrémités avec un découpage tel que deux fentes en croix pour laisser passer le liquide pendant la phase d'expulsion quand la came appuie sur l'extrémité de la tige d'actionnement de la pompe.

On comprend que selon la hauteur de la came qui sera placée en regard de la tige d'actionnement 5, la came viendra en contact plus ou moins tôt avec l'extrémité de la tige d'actionnement lors de l'enfoncemet du bouton poussoir 3, et que par conséquent, la tige pourra effectuer une course plus ou moins complète, et par conséquent la pompe délivrera une dose plus ou moins grande.

Pour des raisons de symétrie et d'ésthétique, on a représenté un deuxième moletage 20 sur le dessus du poussoir 3. Il est bien entendu que les deux pompes peuvent être commandées de la même façon, ce qui permet un choix plus grand de rapports entre les quantités des deux constituants distribués et de choisir la quantité totale.

Dans un autre mode de réalisation représenté sur la figure 8, le bouchon 17' ne présente pas d'ouverture sur le dessus et recouvre complètement la cale 11', tout en lui laissant la possibilité de tourner, mais laisse dégagée, après mise en place, une fente 31 sur un bord voisin de l'emplacement de la cale entre la surface inférieure du bouchon et la surface supérieure en regard 32 de la tête 3' du bouton poussoir. La cale 11' est munie d'un bras 33 qui passe par cette fente et dépasse à l'extérieur, ce qui permet de faire tourner la cale. Des repères peuvent être marqués sur le bord latéral du bouchon 17'.

On a représenté deux flacons semi-cylindriques formant un ensemble cylindrique. On peut utiliser aussi par exemple deux flacons cylindriques dans un étui applati.

Dans la variante des figures 6 et 7, il est prévu un volet 25 pour obturer les orifices de sortie 9, 10 des canaux d'expulsion des liquides à distribuer. Le volet peut être muni de picots 26, 27 qui viennent se loger dans lesdits orifices pour parfaire l'obturation et maintenir le volet en position fermée. Avantageusement, le volet est moulé en une seule pièce avec le bouton poussoir 3, ou tout au moins avec une partie de ce bouton. Le bouchon est moulé avec une ligne d'amincissement 28 de la matière plastique formant charnière, et rappel élastique du volet, quand les picots 26, 27 ne sont pas engagés dans les orifices des canaux. Si les canaux se rencontrent à l'intérieur de la tête du bouton poussoir pour former le mélange avant que les produits n'arrivent à l'air, il n'y a bien entendu qu'un orifice de sortie et un seul picot sur le volet.

## Revendications

1. Dispositif manuel autonome pour mélanger et distribuer deux liquides, comportant:
- deux récipients (1, 2) portables indépendants, juxtaposés, et destinés à contenir chacun un liquide,
- deux pompes montées respectivement sur les deux récipients, comportant chacune une tige d'actionnement (5, 5') dont l'enfoncement provoque l'expulsion de liquide hors du récipient, le mélange se produisant simultanément à la distribution au moyen des deux pompes,
- et un bouton poussoir unique (3) actionnant lesdites pompes ensemble et adapté à la fois sur les deux tiges d'actionnement desdites pompes pour appuyer sur les extrémités desdites tiges de façon à provoquer l'expulsion simultanée de deux doses de liquide, chacune hors d'un récipient,
caractérisé en ce que le bouton poussoir (3) est monté sur les tiges avec un jeu axial réglable par rapport à au moins l'extrémité d'une des tiges (5).

2. Dispositif selon la revendication 1, caractérisé en ce que le bouton poussoir unique (3) est adaptable sur au moins une des tiges (5) de façon à pouvoir glisser en contact étanche autour de ladite tige, et comporte une cale mobile (11), permettant de varier le jeu axial entre l'extrémité de ladite tige et la surface de poussée du bouton poussoir en regard de cette extrémité.

3. Dispositif selon la revendication 2, caractérisé en ce que la cale mobile (11) est une pièce circulaire, montée dans un logement circulaire de façon à pouvoir tourner dans ledit logement, pour pouvoir présenter des cames (19) d'épaisseurs différentes en regard de l'extrémité de ladite tige d'actionnement.

4. Dispositif selon la revendication 3, caractérisé en ce que la cale a la forme d'une pastille (11) avec une collerette circulaire (15) logée dans une rainure circulaire (16) formée dans la tête (3) formant bouton poussoir, qui comporte une ouverture (35, 31) pour laisser apparaître une partie (18, 33) de la cale (11) afin de permettre de changer sa position.

5. Dispositif selon la revendication 4, caractérisé en ce que la tête de bouton poussoir est formée avec une cavité dont le fond comporte un orifice prévu pour s'emmancher sur une tige (5) de pompe, avec un joint (14) permettant le glissement avec étanchéité le long de la tige, ladite cavité étant obturée par un bouchon comportant une ouverture (35, 31) pour laisser apparaître une partie de la cale, ledit bouchon étant fixé à la tête par collage, encliquetage ou soudure.

6. Dispositif selon la revendication 5, caractérisé en ce que le bouchon (17) comporte une ouverture circulaire laissant dégagée une surface plane (18) de la cale (11).

7. Dispositif selon la revendication 5, caractérisé en ce que le bouchon (17') laisse dégagée une fente (31) par où passe un bras (33) solidaire de la cale (11').

8. Dispositif selon une des revendications précédentes, caractérisé en ce qu'il comporte un volet (25) pour obturer le ou les orifices (9, 10) des canaux d'expulsion des liquides à distribuer.

9. Dispositif selon la revendication 8, caractérisé en ce que le volet (25) a la forme d'une plaquette avec un picot (26, 27) pour être enfoncé dans l'orifice de chaque canal de sortie.

10. Dispositif selon une des revendications 8 ou 9, caractérisé en ce que le volet (25) est articulé sur la tête du bouton poussoir (3), de préférence par une ligne d'amincissement de la matière plastique, formée au moulage.

## Patentansprüche

1. Autonome manuelle Vorrichtung zum Mischen und Verteilen zweier Flüssigkeiten, die aufweist:
- zwei nebeneinanderliegende unabhängige tragbare Behälter (1, 2), die je eine Flüssigkeit enthalten,
- zwei Pumpen, die je auf einen der beiden Behälter montiert sind und je eine Betätigungsstange (5, 5') aufweisen, deren Eindrücken den Ausstoß von Flüssigkeit aus dem Behälter hervorruft, wobei die Mischung gleichzeitig mit dem Verteilen mittels der beiden Pumpen geschieht,
- und einen einzigen Druckknopf (3), der die Pumpen gemeinsam betätigt und auf die beiden Betätigungsstangen der Pumpen gemeinsam angepaßt ist, um auf die Enden der Stangen zu drükken und so den gleichzeitigen Ausstoß zweier Flüssigkeitsdosen je aus einem der Behälter zu bewirken,
dadurch gekennzeichnet, daß der Druckknopf (3) mit einem in Bezug auf das Ende mindestens einer der Stangen (5) einstellbaren axialen Spiel auf die Stangen aufgesetzt ist.

2. Vorrichtung nach Anspruch 1, dadurch gekennzeichnet, daß der einzige Druckknopf (3) auf mindestens eine der Stangen (5) so anpaßbar ist, daß er in dichtem Kontakt um diese Stange gleiten kann und daß er eine bewegliche Beilagscheibe (11) aufweist, die es ermöglicht, das axiale Spiel zwischen dem Ende der Stange und der Druckoberfläche des Druckknopfs vor diesem Ende zu variieren.

3. Vorrichtung nach Anspruch 2, dadurch gekennzeichnet, daß die bewegliche Beilagscheibe (11) ein kreisförmiges Teil ist, das in einem kreisförmigen Sitz so angeordnet ist, daß es in diesem Sitz drehen kann, um Nocken (19) unterschiedlicher Dicken vor das Ende der Betätigungsstange bringen zu können.

4. Vorrichtung nach Anspruch 3, dadurch gekennzeichnet, daß die Beilagscheibe die Form einer Pastille (11) mit einem kreisförmigen Kragen (15) hat, der in einer ringförmigen Nut (16) im den Druckknopf bildenden Kopf (3) eingesetzt ist, welcher eine Öffnung (35, 31) aufweist, um einen Teil (18, 33) der Beilagscheibe (11) sichtbar zu machen, um es zu ermöglichen, ihre Stellung zu ändern.

5. Vorrichtung nach Anspruch 4, dadurch gekennzeichnet, daß der Kopf des Druckknopfs mit einem Hohlraum ausgebildet ist, dessen Boden eine Öffnung aufweist, die sich auf eine Pumpenstange (5) aufschiebt, mit einer Dichtung (14), die das dichte Gleiten entlang der Stange erlaubt, wobei der Hohlraum von einem Stopfen verschlossen wird, der eine Öffnung (35, 31) aufweist, um einen Teil der Beilagscheibe sichtbar zu machen, wobei der Stopfen am Kopf durch Kleben, Einrasten oder Löten befestigt ist.

6. Vorrichtung nach Anspruch 5, dadurch gekennzeichnet, daß der Stopfen (17) eine kreisförmige Öffnung aufweist, die eine ebene Oberfläche (18) der Beilagscheibe (11) freiläßt.

7. Vorrichtung nach Anspruch 5, dadurch gekennzeichnet, daß der Stopfen (17') einen Schlitz (31) freiläßt, durch den ein fest mit der Beilagscheibe (11') verbundener Arm (33) durchtritt.

8. Vorrichtung nach einem der vorhergehenden Ansprüche, dadurch gekennzeichnet, daß sie eine Klappe (25) aufweist, um die Öffnung(en) (9, 10) der Ausstoßkanäle der zu verteilenden Flüssigkeiten zu verschließen.

9. Vorrichtung nach Anspruch 8, dadurch gekennzeichnet, daß die Klappe (25) die Form einer Platte mit einer Spitze (26, 27) hat, um in die Öffnung jedes Ausgangskanals eingedrückt zu werden.

10. Vorrichtung nach einem der Ansprüche 8 oder 9, dadurch gekennzeichnet, daß die Klappe (25) an den Kopf des Druckknopfs (3) angelenkt ist, vorzugsweise durch eine Verdünnungslinie des Kunststoffmaterials, die beim Gießen ausgebildet wird.

## Claims

1. An autonomous manual device for mixing and distributing two liquids, comprising:
- two independent portable containers (1, 2), juxtaposed, and each intended to contain a liquid,
- two pumps mounted respectively on the two containers, each comprising an actuating rod (5, 5') the driving in of which causes the expulsion of liquid outside the container, the mixing occurring simultaneously with the distribution by means of the two pumps,
- and a single press-button (3) actuating said pumps together, and fitted at the same time over the two actuating rods of said pumps so as to press on the extremities of said rods so as to cause the simultaneous expulsion of two doses of liquid, each out of one container,
characterised in that the press-button (3) is mounted on the rods with axial play adjustable in relation to at least the extremity of one of the rods (5).

2. A device according to Claim 1, characterised in that the single press-button (3) can be fitted over at least one of the rods (5) so as to be able to slide in liquid-tight contact around said rod, and comprises a movable block (11), making it possible to vary the axial play between the extremity of said rod and the pushing surface of the push-button facing this extremity.

3. A device according to Claim 2, characterised in that the movable block (11) is a circular part, mounted in a circular housing so as to be able to turn in said housing, in order to be able to present cams (19) of different thicknesses facing the extremity of said activation rod.

4. A device according to Claim 3, characterised in that the block has the form of a pellet (11) with a circular collar (15) housed in a circular groove (16) formed in the head (3) forming a push-button, which comprises an aperture (35, 31)in order to reveal a portion (18, 33) of the block (11) so as to make it possible to change its position.

5. A device according to Claim 4, characterised in that the head of the push-button is formed with a cavity, the bottom of which comprises an orifice provided so as to fit over a rod (5) of the pump, with a seal (14) allowing sliding along the rod, said cavity being blocked by a stopper comprising an aperture (35, 31) in order to reveal a portion of the block, said stopper being fixed to the head by sticking, clicking or welding.

6. A device according to Claim 5, characterised in that the stopper (17) comprises a circular aperture leaving clear a flat surface (18) of the block (11).

7. A device according to Claim 5, characterised in that the stopper (17') leaves clear a slot (31) through which there passes an arm (33) integral with the block (11').

8. A device according to one of the preceding claims, characterised in that it comprises a flap (25) to block the orifice or orifices (9, 10) of the expulsion channels for the liquids to be distributed.

9. A device according to Claim 8, characterised in that the flap (25) has the form of a plate with a point (26, 27) for inserting into the orifice of each outlet channel.

10. A device according to one of Claims 8 or 9, characterised in that the flap (25) is hinged to the head of the push-button (3), preferably by a line of thinning in the plastic material, formed during moulding.
